(19) **Europäisches Patentamt**
**European Patent Office**
**Office européen des brevets**

(11) **EP 4 219 403 A1**

(12) **EUROPEAN PATENT APPLICATION**
published in accordance with Art. 153(4) EPC

(43) Date of publication:
**02.08.2023 Bulletin 2023/31**

(21) Application number: **21872468.0**

(22) Date of filing: **22.09.2021**

(51) International Patent Classification (IPC):
$C01G\ 3/00$ (2006.01)    $C01B\ 32/40$ (2017.01)
$C01G\ 9/00$ (2006.01)    $C01G\ 15/00$ (2006.01)
$C01G\ 33/00$ (2006.01)    $C01G\ 45/00$ (2006.01)
$C01G\ 49/00$ (2006.01)    $C01G\ 51/00$ (2006.01)
$C01G\ 53/00$ (2006.01)    $B01J\ 23/72$ (2006.01)
$B01J\ 23/745$ (2006.01)    $B01J\ 23/75$ (2006.01)
$B01J\ 23/755$ (2006.01)    $B01J\ 23/78$ (2006.01)
$B01J\ 23/80$ (2006.01)    $B01J\ 23/825$ (2006.01)
$B01J\ 23/83$ (2006.01)    $B01J\ 23/847$ (2006.01)
$B01J\ 23/889$ (2006.01)    $B01J\ 37/03$ (2006.01)
$B01J\ 37/08$ (2006.01)

(52) Cooperative Patent Classification (CPC):
**C01B 32/40; C01G 3/00; C01G 9/00; C01G 15/00;**
**C01G 33/00; C01G 45/00; C01G 49/00;**
**C01G 51/00; C01G 53/00;** B01J 23/72;
B01J 23/745; B01J 23/75; B01J 23/755;
B01J 23/78; B01J 23/80;      (Cont.)

(86) International application number:
**PCT/JP2021/034706**

(87) International publication number:
**WO 2022/065339 (31.03.2022 Gazette 2022/13)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.09.2020 JP 2020159852**
            **24.09.2020 JP 2020159853**

(71) Applicant: **SEKISUI CHEMICAL CO., LTD.**
**Osaka-shi**
**Osaka**
**530-8565 (JP)**

(72) Inventors:
• **TAKIZAWA Koji**
  **Tsukuba-shi, Ibaraki 300-4292 (JP)**
• **SHINMEI Kenichi**
  **Tsukuba-shi, Ibaraki 300-4292 (JP)**
• **BABA Eisuke**
  **Tsukuba-shi, Ibaraki 300-4292 (JP)**

(74) Representative: **Ter Meer Steinmeister & Partner**
**Patentanwälte mbB**
**Nymphenburger Straße 4**
**80335 München (DE)**

(54) **OXYGEN CARRIER, METHOD FOR PRODUCING OXYGEN CARRIER, AND METHOD FOR PRODUCING GAS**

(57) An oxygen carrier that has a high conversion efficiency of carbon dioxide to carbon monoxide in a metal oxide containing Cu (copper), a method for manufacturing such oxygen carrier, and a method for manufacturing gas using such oxygen carrier are provided. The oxygen carrier contains a metal oxide represented by $Cu_{1-x}(M)_xO_y$ (where M is an element having Pauling's electronegativity of 1.3 to 2.3, x represents a positive real number, and y represents an integer of 1 to 4). In addition, one of the preferred aspects of the oxygen carrier is characterized by containing a metal oxide that contains copper (Cu) and a second element containing zinc (Zn) and in that when the metal oxide is measured by an X-ray diffraction method, at least one diffraction peak having a

**(Cont. next page)**

half-value width of 0.7° or less is observed in an X-ray diffraction profile.

Fig. 1

(52) Cooperative Patent Classification (CPC): (Cont.)
    B01J 23/825; B01J 23/83; B01J 23/847;
    B01J 23/889; B01J 37/03; B01J 37/08

## Description

### Technical Field

The present invention relates to an oxygen carrier, a method for manufacturing an oxygen carrier, and a method for manufacturing gas, and more specifically, relates to, for example, an oxygen carrier that is available for the chemical looping method, a method for manufacturing such oxygen carrier, and a method for manufacturing gas using such oxygen carrier.

### Background Art

In recent years, the atmospheric concentration of carbon dioxide, which is a kind of greenhouse gas, continues to increase. Increasing the concentration of carbon dioxide in the atmosphere contributes to global warming. Therefore, it is important to recover the carbon dioxide to be released into the atmosphere, and if the recovered carbon dioxide can be converted into a valuable substance and reused, a carbon recycling society can be realized.

For example, metal oxides containing copper and zinc are used as a catalyst for synthesizing methanol from synthesis gas containing carbon dioxide. Catalysts utilize interaction between substances, the size of the action point on the surface of the catalyst thus greatly affects their properties. Therefore, several research examples have been reported on the structure of catalysts (metal oxides) in expectation of high activity.

In order to improve the activity of the catalyst, for example, Patent Document 1 describes a method of controlling the lattice constant and pore distribution of copper oxide within a desired range by adjusting the molar ratio of copper, zinc, and aluminum. In addition, Patent Document 2 describes a method for manufacturing a carbon dioxide conversion catalyst containing copper oxide having a high specific surface area as a main component.

On the other hand, as a method for manufacturing carbon monoxide from carbon dioxide, a method using a reverse water gas shift reaction is known. Such reaction is usually carried out at a temperature of 500°C or more. However, in a case of using the catalysts described in Patent Documents 1 and 2, the firing of the metal oxide proceeds during the reaction under high-temperature conditions at the reaction temperature of 500°C or more, even if the pore distribution and specific surface area of the metal oxide are adjusted, and thus the structure of the metal oxide tends to change. Furthermore, the present inventors have found that as a result of the progress of metal agglomeration in accordance with the above process, the reactivity with carbon dioxide is lowered, making it difficult to efficiently produce carbon monoxide.

In addition, in this conventional reverse water gas shift reaction, there is a problem in that since carbon monoxide as the product and water coexist in the system, the conversion efficiency of carbon dioxide to carbon monoxide is reduced due to restriction of chemical equilibrium.

Therefore, in order to solve the above problem, a chemical looping method is used to convert (synthesize) carbon monoxide from carbon dioxide. The chemical looping method referred to here is a method in which the above-described reverse water gas shift reaction is divided into two reactions of a reduction reaction with hydrogen and a production reaction of carbon monoxide from carbon dioxide, and metal oxide (MOx) bridges these reactions (see the following formulae).

$$H_2 + MO_x \rightarrow H_2O + MO_{x-1}$$

$$CO_2 + MO_{x-1} \rightarrow CO + MO_x$$

In the above formulae, $MO_{x-1}$ represents a state in which part or all of the metal oxide has been reduced.

In the chemical looping method, water and carbon monoxide, which are substrates for the reverse reaction, do not coexist during each reaction, there is thus a possibility of obtaining a higher conversion efficiency of carbon dioxide to carbon monoxide than that in the chemical equilibrium of the reverse water gas shift reaction.

In this chemical looping method, cerium oxide or the like, which easily causes oxygen vacancy, is widely used as a metal oxide that bridges the reactions.

For example, Non-Patent Document 1 describes a method for producing a metal oxide having reversible oxygen vacancy by using a mixed metal oxide of a rare earth metal oxide and iron oxide. In addition, Patent Document 3 describes a method for converting carbon dioxide to carbon monoxide using copper oxide.

**Prior Art Document**

**Non-Patent Document**

Non-Patent Document 1: Journal of CO2 Utilization 17 (2017) 60-68

**Patent Document**

  Patent Document 1: International Patent Publication No. WO2013/072197
  Patent Document 2: US Patent Publication No. 9492809
  Patent Document 3: US Patent Publication No. 9540236

**Summary of Invention**

**Problem to be Solved by the Invention**

The mixed metal oxide described in Non-Patent Document 1 is a mixture of a plurality of types of metal oxides, and the interaction between the metal oxides is not appropriate, and thus the conversion efficiency of carbon dioxide to carbon monoxide is low. In addition, in a case of the copper oxide alone described in Patent Document 3, there is oxygen vacancy while the reactivity with carbon dioxide is insufficient, and thus efficient conversion to carbon monoxide is difficult.

The present invention has been made taking such situation into consideration, and object thereof is to define the electronegativity of the element to be introduced in a metal oxide containing Cu (copper) to provide an oxygen carrier in which the conversion efficiency of carbon dioxide to carbon monoxide is high even under high temperature conditions of 500°C or more and that is available for, for example, the chemical looping method, and to provide a method for manufacturing such oxygen carrier and a method for manufacturing gas using the same.

**Means for Solving the Problem**

Such objects are achieved by the present invention described below.

(1) the oxygen carrier according to the present invention is characterized by containing a metal oxide represented by $Cu_{1-x}(M)_xO_y$ (where M is an element having Pauling's electronegativity of 1.3 to 2.3, and x represents a positive real number, and y represents an integer of 1 to 4).

(2) In the oxygen carrier according to the present invention, the electronegativity of M is preferably 1.3 to 1.9.

(3) In the oxygen carrier according to the present invention, M is preferably at least one element belonging to Periods 3 to 6.

(4) In the oxygen carrier according to the present invention, M is preferably at least one element belonging to Groups 2 to 14.

(5) In the oxygen carrier according to the present invention, M is preferably at least one selected from the group consisting of magnesium (Mg), aluminum (Al), silicon (Si), titanium (Ti), vanadium (V), chromium (Cr), manganese (Mn), iron (Fe), cobalt (Co), nickel (Ni), zinc (Zn), gallium (Ga), zirconium (Zr), niobium (Nb), silver (Ag), indium (In), hafnium (Hf), and tantalum (Ta) .

(6) In the oxygen carrier according to the present invention, x is preferably 0.1 to 0.9.

(7) The oxygen carrier according to the present invention is preferably characterized in that when the metal oxide is measured by an X-ray diffraction method, at least one diffraction peak having a half-value width of 0.7° or less is observed in an X-ray diffraction profile.

(8) In the oxygen carrier according to the present invention, the diffraction peak is observed at $2\theta$ preferably in the range of 60° to 65° in the X-ray diffraction profile.

(9) The oxygen carrier according to the present invention preferably contains a metal oxide containing copper (Cu), and zinc (Zn) as M and containing a second element.

(10) In the oxygen carrier according to the present invention, the second element preferably includes the zinc (Zn) and at least one selected from the group consisting of aluminum (Al), gadolinium (Gd), silicon (Si), manganese (Mn), cobalt (Co), yttrium (Y), cerium (Ce), and magnesium (Mg).

(11) In the oxygen carrier according to the present invention, the molar ratio of the second element to the total of the copper (Cu) and the second element is preferably 10 to 90 mol% in the metal oxide.

(12) The oxygen carrier of the present invention preferably further contains a binder that binds the metal oxide.

(13) In the oxygen carrier of the present invention, the amount of the binder is preferably 70 parts by mass or less with respect to 100 parts by mass of the oxygen carrier.

(14) In the oxygen carrier of the present invention, the binder is preferably at least one selected from the group consisting of zeolite, $Al_2O_3$, $TiO_2$, $SiO_2$, $ZrO_2$, and MgO.

(15) The oxygen carrier of the present invention is preferably used in separate reaction steps of a reaction of reducing carbon dioxide to produce a gas containing carbon monoxide and a reaction of reducing the oxidized oxygen carrier with a reducing gas containing hydrogen.

(16) A method for manufacturing an oxygen carrier of the present invention is a method for manufacturing the oxygen carrier according to the present invention, the method comprising:

a first step of adding dropwise a raw material aqueous solution containing a salt of the copper (Cu) and a salt of M and a basic alkaline aqueous solution into water to obtain a mixed solution;

a second step of recovering a precipitate generated in the mixed solution; and

a third step of firing the recovered precipitate at a firing temperature of 500 to 800°C to obtain the metal oxide.

(17) In the method for manufacturing an oxygen carrier of the present invention, it is preferable that the firing temperature is maintained for 1 to 24 hours.

(18) In the method for manufacturing an oxygen carrier of the present invention, it is preferable that the temperature rising rate to the firing temperature is 0.5 to 20 °C/min.

(19) The method for manufacturing gas of the present invention is characterized by including bringing the oxygen carrier according to the present invention into contact with a raw material gas containing carbon dioxide to reduce the carbon dioxide and to manufacture a produced gas containing carbon monoxide.

**Effects of the Invention**

According to the present invention, for example, a produced gas containing carbon monoxide can be efficiently manufactured from a raw material gas containing carbon dioxide. Also, the oxygen carrier according to the present invention is available for, for example, the chemical looping method.

**Brief Description of the Drawings**

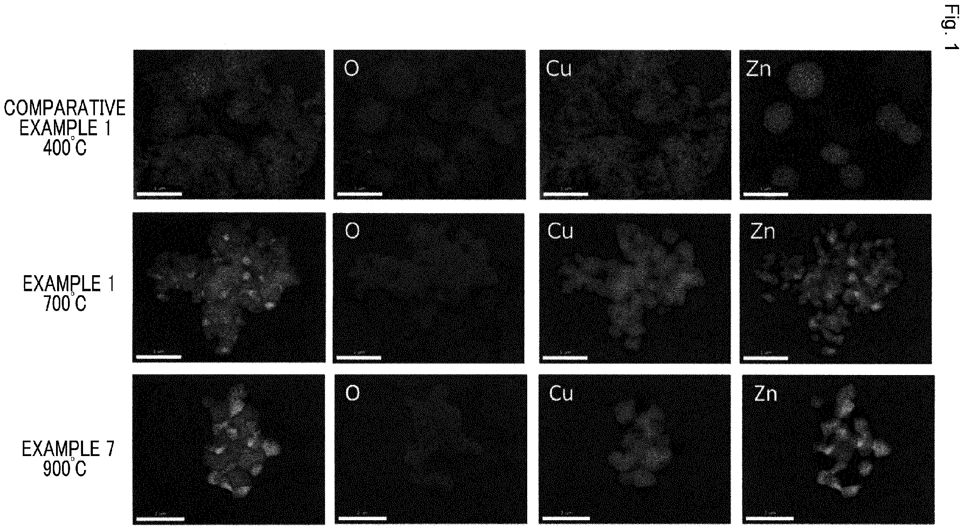

FIG. 1 is an image obtained from a mapping measurement by STEM-EDS analysis.

**Description of Embodiments**

Hereinafter, the oxygen carrier, the method for manufacturing an oxygen carrier, and the method for manufacturing gas according to the present invention will be described in detail based on preferred embodiments.

[Oxygen carrier]

The oxygen carrier according to the present invention is used, for example, when being brought into contact with a raw material gas containing carbon dioxide to reduce carbon dioxide and to manufacture a produced gas containing carbon monoxide. In addition, the oxygen carrier can be reduced (regenerated) by bringing the oxidized oxygen carrier into contact with a reducing gas, preferably a reducing gas containing hydrogen.

At this time, preferably by alternately passing a raw material gas and a reducing gas through a reaction tube (reaction vessel) filled with the oxygen carrier according to the present invention, conversion of carbon dioxide into carbon monoxide by the oxygen carrier and regeneration of the oxygen carrier in an oxidized state by the reducing gas are performed.

The metal oxide in the oxygen carrier according to the present invention is a compound that can cause reversible oxygen vacancy, and means a compound that causes deficiency in oxygen element by reduction of the compound itself and that when the compound in a state deficient in oxygen element (reduction state) brings into contact with carbon dioxide, exhibits the action of depriving carbon dioxide of oxygen element to reduce the carbon dioxide.

The oxygen carrier according to the present invention contains a metal oxide represented by the general formula: $Cu_{1-x}(M)_xO_y$ and a binder that binds the metal oxide. In the general formula: $Cu_{1-x}(M)_xO_y$, M is an element having Pauling's electronegativity (hereinafter, also simply described as "electronegativity") of 1.3 to 2.3 (hereinafter, it is also simply described as "element M").

It is considered that the Cu-O-M bond is activated since the metal oxide represented by the general formula: $Cu_{1-x}(M)_xO_y$ contains the element M having an electronegativity within the above range, thus oxygen elements are released more efficiently by contact with a reducing gas to induce oxygen vacancy, and while generating lattice defects, the distortion due to these lattice defects facilitates deprivation of oxygen elements from carbon dioxide.

In addition, simple metal oxides or mixtures thereof tend to adsorb impurities contained in the raw material gas and the reducing gas, and have low stability. Moreover, in a chemical looping method in which oxidation and reduction alternately occur, simple metal oxides alone tend to agglomerate, resulting in low stability. In contrast, the metal oxides are less likely to adsorb impurities, and can maintain their ability to deprive carbon dioxide of oxygen elements for a long period of time. Furthermore, since a plurality of metal elements are present, agglomeration is prevented and stability is high. As a result, the conversion efficiency from carbon dioxide to carbon monoxide by the oxygen carrier can be enhanced.

Here, x is a positive real number, preferably 0.1 to 0.9, and more preferably 0.3 to 0.7. In this case, lattice defects due to oxygen vacancy are more likely to occur in the metal oxide, and the degree of distortion due to the lattice defects tends to be moderate.

In addition, y is an integer of 1 to 4, preferably an integer of 1 to 3, and more preferably an integer of 1 to 2. In this case, the stability of the metal oxide is likely to be improved.

The above general formula: $Cu_{1-x}(M)_xO_y$ is a compositional formula, and the metal oxide represented by such general formula can include any of an aspect of the complex of complex metal oxide, an aspect of the mixture of metal oxides represented by a specific formula, and other aspects.

The electronegativity of the element M is only required to be from 1.3 to 2.3, preferably from 1.3 to 1.9, and more preferably from 1.5 to 1.8. The electronegativity of Cu is 1.90, and by selecting an element M having an electronegativity close to that of Cu and an element M having an electronegativity lower than that of Cu, the degree of activation of the Cu-O-M bond is easily increased.

The element M is preferably at least one element belonging to Periods 3 to 6, and more preferably at least one element belonging to Periods 3 to 5. In this case, since the ionic radius of the element M and the ionic radius of Cu can be made close to each other, metal oxides having high stability are easily synthesized.

In addition, the element M is preferably at least one element belonging to Groups 2 to 14, more preferably at least one element belonging to Groups 4 to 14, and still more preferably at least one element belonging to Groups 8, 12, and 13. The present inventors have found that by selecting these elements M, the conversion efficiency of carbon dioxide to carbon monoxide by a metal oxide (oxygen carrier) can be particularly enhanced.

From the above, examples of element M include magnesium (Mg), aluminum (Al), silicon (Si), titanium (Ti), vanadium (V), chromium (Cr), manganese (Mn), iron (Fe), cobalt (Co), nickel (Ni), gallium (Ga), germanium (Ge), yttrium (Y), zirconium (Zr), niobium (Nb), molybdenum (Mo), ruthenium (Ru), rhodium (Rh), palladium (Pd), silver (Ag), indium (In), tin (Sn), hafnium (Hf), tantalum (Ta), lanthanum (La), cerium (Ce), samarium (Sm), zinc (Zn), gadolinium (Gd), and scandium (Sc), and one or two or more of these can be selected.

Among these, the element M is preferably at least one selected from the group consisting of Mg, Al, Si, Ti, V, Cr, Mn, Fe, Co, Ni, Zn, Ga, Zr, Nb, Ag, In, Hf, and Ta and more preferably at least one selected from the group consisting of Mg, Al, Fe, In, and Zn.

In the oxide, the molar ratio of copper to element M is preferably in the range of 9:1 to 1:9, more preferably in the range of 6:1 to 1:6, and still more preferably in the range of 2.5:1 to 1:2.5. In other words, in the metal oxide, the molar ratio of the element M to the total of copper and the element M is preferably 10 to 90 mol%, more preferably 15 to 85 mol%, and still more preferably 30 to 70 mol%. A metal oxide containing such a sufficient amount of the element M can further increase the degree of activation of the Cu-O-M bond.

As one preferred aspect, the oxygen carrier according to the present invention contains a metal oxide containing copper (Cu) and, as the element M, a second element containing zinc (Zn). Such metal oxide may be in a crystalline state in which the element M is solid-dissolved in copper oxide, and is preferably in a state in which the crystal phase (grain boundary) of copper oxide and the crystal phase (grain boundary) of the oxide of the element M are included in close proximity to each other, and more preferably in a state in which these crystal phases (grain boundaries) are bound to each other via an amorphous phase (unformed phase) containing oxygen elements. In this case, by selecting an appropriate element M, the above actions are more likely exerted.

In addition, copper oxide alone is less likely to be adsorbed with the raw material gas (carbon dioxide) or the reducing gas (hydrogen). On the other hand, the above-described metal oxides are likely to be adsorbed with the raw material gas and the reducing gas, and can be kept in contact with carbon dioxide or hydrogen for a long period of time. As a result, the conversion efficiency from carbon dioxide to carbon monoxide by the oxygen carrier can be enhanced.

Examples of element M other than Zn include those described above, and one or two or more of these can be selected. Among them, the element M other than Zn is preferably at least one selected from the group consisting of Al, Si, Ti, V, Cr, Mn, Fe, Co, Ni, Gd, Ga, Zr, Nb, Ag, Hf, In, Ta, Y, and Mg.

Under the above conditions, from the viewpoint of particularly enhancing the conversion efficiency from carbon dioxide to carbon monoxide, elements M other than Zn is preferably at least one selected from the group consisting of Al, Gd, Si, Mn, Co, Y, Ce, and Mg and more preferably at least one selected from the group consisting of Al and Gd. According to the present invention, while using copper (Cu), which is an inexpensive metal element, as an active species, by selecting an appropriate element M, an oxygen carrier that has a high conversion efficiency of carbon dioxide to carbon monoxide and is advantageous economically is obtained. In addition, in such metal oxides, the stability under high temperature conditions of 500°C or more is more easily enhanced.

In the oxygen carrier according to the present invention, it is preferable that when the metal oxide is measured by an X-ray diffraction method, at least one diffraction peak having a half-value width of 0.7° or less is observed in an X-ray diffraction profile. Here, in this specification, a diffraction peak is defined as a peak having a half-value width of 1° or less among peaks in an X-ray diffraction profile. Note that the number of diffraction peaks may increase or decrease depending on the number of elements M.

A plurality of diffraction peaks are observed in the X-ray diffraction profile of the metal oxide, and in particular, a diffraction peak having a half-value width of 0.7° or less (hereinafter, also described as a "specific diffraction peak") is observed. In a case where such specific diffraction peak is observed, it can be determined that the crystallinity of the oxide of each element in the metal oxide is high and the primary particles are large. Therefore, even under high temperature conditions of 500°C or more, agglomeration due to firing is not likely to progress, the activity of the Cu-O-M bond is maintained at a high level, and the conversion efficiency from carbon dioxide to carbon monoxide is high.

The half-value width of the specific diffraction peak is only required to be 0.7° or less, preferably 0.1° to 0.7°, more preferably 0.2° to 0.4°.

The specific diffraction peak is observed at $2\theta$ preferably in the range of 60° to 65° and more preferably in the range of 61° to 63°, in the X-ray diffraction profile. The specific diffraction peak observed at such $2\theta$ range is diffraction by the crystal lattice plane of the oxide of each element, and more easily reflects the degree of crystallinity (particularly crystallinity of copper oxide).

The number of specific diffraction peaks observed in the above range may be one, but is preferably plural, more preferably two to four. In this case, it can be determined that the crystallinity of the oxide of each element in the metal oxide is sufficiently high. In addition, it can also be considered that the crystal phases of each oxide are uniformly dispersed and present in the metal oxide.

The oxygen carrier according to the present invention may be composed only of metal oxides, or may contain a binder (carrier) that binds metal oxides. By containing such binder, the shape of the oxygen carrier can be stably maintained when it is molded.

The binder is not particularly limited as long as it is difficult to be modified depending on the raw material gas, reaction conditions, and the like. Specific examples of binders include carbon materials (such as graphite and graphene), zeolite, montmorillonite, $SiO_2$, $ZrO_2$, $TiO_2$, $V_2O_5$, MgO, $Al_2O_3$, and composite oxides containing these. Among these, the binder is preferably at least one selected from the group consisting of zeolite, $Al_2O_3$, $TiO_2$, $SiO_2$, $ZrO_2$, and MgO. This is because these binders are excellent in the ability to bind metal oxides.

Even in a case where the oxygen carrier according to the present invention contains a binder, the amount of the binder is, relative to 100 parts by mass of the oxygen carrier, preferably 70 parts by mass or less, more preferably 50 parts by mass or less, still more preferably 30 parts by mass or less, and particularly preferably 10 parts by mass or less. In addition, the amount of the binder is, relative to 100 parts by mass of the oxygen carrier, preferably 2 parts by mass or more, and more preferably 5 parts by mass or more.

By setting the amount of the binder contained in the oxygen carrier within the above range, the conversion of carbon dioxide to carbon monoxide by the oxygen carrier can be promoted, that is, the conversion efficiency can be sufficiently further enhanced. In addition, the shape stability (mechanical strength) of the oxygen carrier when it is molded can be improved.

The filling density of the oxygen carrier is preferably 1.1 g/mL or less, more preferably 0.4 to 1 g/mL, and still more preferably 0.5 to 0.9 g/mL. In a case where the filling density is too low, the passage speed of gas is too high, and thus the contact time of the oxygen carrier with the raw material gas and the reducing gas is shortened. As a result, the conversion efficiency of carbon dioxide to carbon monoxide by the oxygen carrier and the regeneration efficiency of the oxygen carrier in an oxidized state by the reducing gas are likely decreased. On the other hand, in a case where the filling density is too high, the passage speed of the gas is too slow, and thus the reaction is not likely to proceed or a long period of time is required to manufacture the produced gas.

The pore volume of the oxygen carrier is preferably 0.4 $cm^3$/g or more, more preferably 1 to 30 $cm^3$/g, and still more preferably 5 to 20 $cm^3$/g. In a case where the pore volume is too small, the raw material gas and the reducing gas are not likely to enter the inside of the oxygen carrier. As a result, the contact area of the oxygen carrier with the raw material gas and reducing gas is reduced, and thus the conversion efficiency of carbon dioxide to carbon monoxide by the oxygen carrier and the regeneration efficiency of the oxygen carrier in an oxidized state by the reducing gas is likely decreased. On the other hand, even if the pore volume exceeds the upper limit, no further increase in the effect can be expected, and the mechanical strength tends to decrease depending on the type of oxygen carrier.

The shape of the oxygen carrier is not particularly limited, but it is preferably granular, for example. In a case of being granular, the filling density of the oxygen carrier is likely adjusted within the above range.

Here, "granular" is a concept including powdery, particulate, lumpy, pellet-like, and the like, and its shape may be any of spherical, plate-like, polygonal, crushed, columnar, needle-like, scale-like, or the like.

The average particle size of the oxygen carrier is preferably 0.1 um to 5 mm, more preferably 0.5 um to 1 mm, and still more preferably 1 um to 0.5 mm. An oxygen carrier having such average particle size tends to have a filling density within the above range.

In this specification, the average particle size means the average value of the particle sizes of arbitrary 200 oxygen carriers in one visual field observed with an electron microscope. In this case, the "particle size" means the maximum length of the distance between two points on the outline of the oxygen carrier. In a case where the oxygen carrier is columnar, the maximum length of the distance between two points on the contour line of the end face is defined as the "particle size". In addition, the average particle size means the average particle size of the secondary particles in a case where the oxygen carrier is, for example, lumpy and the primary particles are agglomerated.

The BET specific surface area of the oxygen carrier is preferably 1 to 500 $m^2/g$, more preferably 3 to 450 $m^2/g$, and still more preferably 5 to 400 $m^2/g$. In a case where the BET specific surface area is within the above range, the conversion efficiency of carbon dioxide to carbon monoxide by the oxygen carrier is likely to be improved.

In addition, in the present invention, the distortion due to this lattice defect in the metal oxide can be sufficiently increased, and thus a state in which the oxygen capacity of the oxygen carrier is high in a wide range from low temperature (about 400°C) to high temperature (about 650°C) can be maintained. That is, the oxygen carrier can efficiently convert carbon dioxide to carbon monoxide over a wide temperature range.

The oxygen capacity of the oxygen carrier at 400°C is preferably 1 to 40 mass%, and more preferably 2 to 30 mass%. In a case where the oxygen capacity of the oxygen carrier at low temperature is within the above range, it means that the oxygen capacity is sufficiently high even at the temperature during actual operation (about 650°C), and it can be said that the oxygen carrier has an extremely high conversion efficiency of carbon dioxide to carbon monoxide.

[Method for manufacturing oxygen carrier]

Next, a method for manufacturing an oxygen carrier will be described.

Metal oxides can be synthesized, for example, by a coprecipitation method, a sol-gel method, a solid-phase method, a hydrothermal synthesis method, or the like.

A metal oxide can be synthesized, in one example, for example, as follows. First, a raw material aqueous solution is prepared by dissolving salts of a plurality of types of elements (hereinafter, also described as "constituent elements") that constitute a metal oxide in water. Next, the raw material aqueous solution and a basic alkaline aqueous solution are added dropwise to water to obtain a mixed solution. Then, the precipitate generated in this mixed solution is recovered, and then dried and fired. That is, the metal oxide in the present invention can be easily and reliably synthesized by a so-called coprecipitation method.

[Mixed solution preparation step (first step)]

First, a raw material aqueous solution containing salts of constituent elements (copper and element M) and a basic alkaline aqueous solution are added dropwise to water to obtain a mixed solution.

Examples of salts of constituent elements include nitrates, sulfates, chlorides, hydroxides, carbonates, and composites thereof, and among these, nitrates are preferred. In addition, hydrates may be used as the salts of the constituent elements, if necessary.

Examples of alkali include sodium carbonate, potassium carbonate, rubidium carbonate, cesium carbonate, sodium hydroxide, potassium hydroxide, ammonia, and urea.

The dropping rate of the raw material aqueous solution into water is not particularly limited, but is preferably 0.1 to 50 mL/min, and more preferably 1 to 25 mL/min. In a case where the raw material aqueous solution is dropped at such dropping rate, precipitates containing respective constituent element is generated individually, agglomeration is prevented, and a sufficient amount of precipitates containing copper and the element M can be generated.

The concentration of the raw material aqueous solution and the concentration of the basic alkaline aqueous solution are not particularly limited, but are preferably 0.1 to 5 mol/L, and more preferably 0.25 to 2.5 mol/L. Even by using an aqueous solution having such concentration, precipitates containing respective constituent element is generated individually, agglomeration is prevented, and a sufficient amount of precipitates containing copper and the element M can be generated.

The temperature of the mixed solution is also not particularly limited, but it is preferably 20°C to 90°C, and more preferably 40°C to 70°C. By adjusting the temperature to such temperature, a precipitate containing copper and the element M can be smoothly generated.

In addition, the pH of the mixed solution is preferably 6.5 to 8.5, more preferably 6.6 to 7.7, and still more preferably 6.7 to 7.3. By adjusting the pH of the mixed solution within such range, a precipitate containing copper and the element M can be rapidly generated.

[Metal oxide production step (second step)]

Next, the precipitate generated in the mixed solution is recovered by, for example, filtration.

In order to promote the generation (maturation) of a precipitate containing copper and the element M, the mixed solution is preferably stirred for a predetermined period of time. In this case, the stirring speed of the mixed solution is preferably 50 rpm or more, and more preferably 75 to 100 rpm. In addition, the stirring time is preferably 0.5 to 5 hours, and more preferably 1 to 3 hours.

[Drying step]

Next, the recovered precipitate is dried.

Drying of the precipitate is performed at a temperature of preferably 20°C to 200°C, and more preferably 50°C to 150°C, for a period of time of preferably 0.5 to 20 hours, and more preferably 1 to 15 hours.

[Firing step (third step)]

Next, the dried precipitate is fired. Thus, a metal oxide is obtained.

Firing of the precipitate is performed at a temperature (firing temperature) of preferably 300°C to 1200°C, more preferably 350°C to 800°C, still more preferably 500°C to 800°C, and particularly preferably 550°C to 750°C, for a period of time (holding time at the above firing temperature) of preferably 1 to 24 hours, and more preferably 1.5 to 20 hours. In a case where the precipitate is fired under such firing conditions, a metal oxide that is excellent in stability even under high temperature conditions of 500°C or more can be obtained.

The temperature may be raised at a temperature rising rate of 0.5 to 20 °C/min, preferably a temperature rising rate of 1 to 20 °C/min, and more preferably a temperature rising rate of 2 to 10 °C/min, until reaching the firing temperature. As a result, the growth of the crystal phase of copper oxide can be promoted, and cracking of the metal oxide can be avoided. By firing the precipitate under the above conditions, the degree of crystallinity of the crystal phase of copper oxide can be increased while preventing the abundance ratio of Cu-O-M from decreasing.

The metal oxide obtained at this stage may be used as it is, or may be pulverized (classified if necessary) and used as the oxygen carrier according to the present invention, and the formed product obtained through the following forming step may be used as the oxygen carrier according to the present invention.

Next, the resulting metal oxide (particles or lumps) is optionally pulverized and then mixed with binder particles to obtain a mixture. Then, the mixture is fired to obtain a sintered body, and the sintered body is pulverized and then classified as necessary. As a result, an oxygen carrier formed by binding metal oxides with a binder is obtained.

Firing of the mixture is performed at a temperature of preferably 300°C to 1200°C, and more preferably 350°C to 800°C, for a period of time of preferably 1 to 24 hours, and more preferably 1.5 to 20 hours.

Pulverization of the sintered body can be performed using, for example, a jet mill, ball mill, bead mill, rod mill, or the like.

[Method for using oxygen carrier]

The oxygen carrier according to the present invention can be used, for example, in the chemical looping method, as mentioned above. In addition, the oxygen carrier according to the present invention can be used for reducing carbon dioxide as mentioned above.

More specifically, a reduction reaction of carbon dioxide and a reduction reaction of an oxygen carrier may be performed, and the oxygen carrier is preferably used to circulate between the reduction reaction of carbon dioxide and the reduction reaction of the oxygen carrier. In the reduction reaction of the oxygen carrier, another reducing agent, preferably a reducing gas containing hydrogen, is used.

In addition, the oxygen carrier according to the present invention is preferably used for so-called reverse water gas shift reaction. The reverse water gas shift reaction is a reaction that produces carbon monoxide and water from carbon dioxide and hydrogen. In a case where the chemical looping method is applied, the reverse water gas shift reaction is divided into a reduction reaction of an oxygen carrier (first process) and a reduction reaction of carbon dioxide (second process), and performed. The reduction reaction of the oxygen carrier is a reaction represented by the following formula (A), and the reduction reaction of carbon dioxide is a reaction represented by the following formula (B).

$$H_2 \text{ (gas)} + Cu_{1-x}(M)_xO_y \text{ (solid)} \rightarrow H_2O \text{ (gas)} + Cu_{1-x}(M)_xO_{y-n} \text{ (solid)} ... \qquad (A)$$

$$CO_2 \text{ (gas)} + Cu_{1-x}(M)_xO_{y-n} \text{ (solid)} \rightarrow CO \text{ (gas)} + Cu_{1-x}(M)_xO_y ... \qquad (B)$$

In the formulae (A) and (B), n is usually a value smaller than 2, preferably 0.05 to 1.7, more preferably 0.1 to 1.5, and still more preferably 0.15 to 1.3.

That is, in the reduction reaction of the oxygen carrier, hydrogen, which is a type of reducing gas, is oxidized to produce water. In addition, in the reduction reaction of the carbon dioxide, carbon dioxide is reduced to produce carbon monoxide.

The reaction temperature in the reduction reaction of the oxygen carrier is only required to be any temperature at which the reduction reaction can proceed, but is preferably 300°C or more, more preferably 400°C or more, still more preferably 500°C or more, and particularly preferably 550°C or more. Within such temperature range, an efficient reduction reaction of the oxygen carrier can proceed.

The upper limit of this reaction temperature is preferably 850°C or less, more preferably 750°C or less, and still more preferably 700°C or less. By setting the upper limit of the reaction temperature within the above range, economical efficiency can be improved.

In addition, the reaction temperature in the reduction reaction of carbon dioxide is preferably 300°C or more, more preferably 350°C or more, and still more preferably 400°C or more. Within such temperature range, an efficient reduction reaction of carbon dioxide can proceed.

The upper limit of the reaction temperature is preferably 1000°C or less, more preferably 850°C or less, still more preferably 700°C or less, and particularly preferably 650°C or less. Since the oxygen carrier can perform a reduction reaction of carbon dioxide to carbon monoxide with high efficiency even at low temperatures, the reaction temperature of the reduction reaction of carbon dioxide can be set to relatively low. In addition, by setting the upper limit of the reaction temperature within the above range, utilization of waste heat is not only facilitated, but economical efficiency can be further improved.

In the present invention, the reduced product obtained by the reduction reaction of carbon dioxide may be a substance other than carbon monoxide, and a specific example thereof is methane. It is preferable that the reduced product such as carbon monoxide obtained by the above-described reduction reaction of carbon dioxide is further converted into an organic substance or the like by microbial fermentation or the like. Example of the microbial fermentation includes anaerobic fermentation. Examples of the obtained organic substances include methanol, ethanol, acetic acid, butanol, derivatives thereof, mixtures thereof, and C5 or more compounds such as isoprene.

Furthermore, the reduced products such as carbon monoxide may be converted, by metal oxides, into C1 to C20 compounds including hydrocarbons and alcohols conventionally synthesized by petrochemicals. Specific examples of the obtained compounds include methane, ethane, propylene, methanol, ethanol, propanol, acetaldehyde, diethyl ether, acetic acid, butyric acid, diethyl carbonate, butadiene, and the like.

[Properties of oxygen carrier]

The oxygen carrier according to the present invention preferably has the following properties.

That is, in a case where a stainless steel reaction tube with an inner diameter of 8 mm and a pressure gauge placed in the flow path is filled with an oxygen carrier at a height of 40 cm, and nitrogen gas having a concentration of 100% by volume is passed at 30 mL/min through the reaction tube, the pressure rise in 10 minutes is preferably 0.03 MPaG or less and more preferably 0.01 MPaG or less.

An oxygen carrier exhibiting such properties can be determined to satisfy the above ranges in filling density and pore volume, and can sufficiently increase the conversion efficiency of carbon dioxide to carbon monoxide.

Although the oxygen carrier, the method for manufacturing an oxygen carrier, and the method for manufacturing gas according to the present invention have been described above, the present invention is not limited to these.

For example, the oxygen carrier, the method for manufacturing an oxygen carrier, and the method for manufacturing gas according to the present invention may have any additional configuration to the above embodiments, and may be replaced with any configuration that exhibits similar functions, and a part of the configuration may be omitted.

**Examples**

Hereinafter, the present invention will be described in more detail with reference to Examples and Comparative Examples, but the present invention is not limited to these Examples.

1. Manufacture of oxygen carriers

(Example 1)

First, as raw materials, copper (II) nitrate trihydrate (manufactured by FUJIFILM Wako Pure Chemical Corporation, purity: 99.9%) and magnesium nitrate hexahydrate (manufactured by FUJIFILM Wako Pure Chemical Corporation, purity: 99.0%) were prepared.

Next, this raw material was dissolved in distilled water to prepare a 1 mol/L raw material aqueous solution (liquid A). The molar ratio of Cu to Mg in the liquid A was adjusted to 0.3:0.7.

In addition, sodium carbonate was dissolved in distilled water to prepare a 1 mol/L sodium carbonate aqueous solution (liquid B).

Next, liquid A and liquid B were simultaneously dropped into a container containing 20 mL of distilled water at 70°C to obtain a mixed solution. The dropping rate of liquid A was set to 10 mL/min, and the mixed solution was stirred such that the generated precipitate was not agglomerated.

In addition, the temperature of the mixed solution was maintained at 70°C, and the dropping rate of the liquid B was also adjusted such that the pH was 7.0.

Then, the mixed solution was matured for 3 hours while being maintained at 70 °C and continuously stirred. After completion of maturation, the precipitate was recovered by filtration and sufficiently washed with water.

Next, the recovered precipitate was dried at 120°C for 12 hours in a dryer, and then fired at 700°C for 3 hours to obtain a metal oxide.

Next, the metal oxide was pulverized by a ball mill to obtain a granular oxygen carrier (average particle size: 0.5 μm) consisting of the metal oxide alone.

X-ray diffraction (XRD) measurements were performed on the particles of this metal oxide using a RINT-TTRIII apparatus (CuKα radiation, 50 kV, 300 mA).

As a result, characteristic diffraction peaks derived from copper (II) oxide and magnesium (II) oxide was observed in the obtained oxygen carrier (metal oxide). In addition, it was confirmed by ICP measurement of the oxygen carrier (metal oxide) that the molar ratio of Cu to Mg was 0.3:0.7.

(Example 2)

A granular oxygen carrier (average particle size: 0.5 μm) was manufactured in the same manner as in Example 1, except that the molar ratio of Cu to Mg in the liquid A was adjusted to 0.7:0.3. As a result of XRD measurement similar to the above, characteristic diffraction peaks derived from copper (II) oxide and magnesium (II) oxide was observed in the oxygen carrier (metal oxide). In addition, it was confirmed by ICP measurement of the oxygen carrier (metal oxide) that the molar ratio of Cu to Mg was 0.7:0.3.

(Example 3)

A granular oxygen carrier (average particle size: 0.5 μm) was manufactured in the same manner as in Example 1, except that manganese nitrate hexahydrate (manufactured by FUJIFILM Wako Pure Chemical Corporation, purity: 99.0%) was used instead of magnesium nitrate hexahydrate, and the molar ratio of Cu to Mn in the liquid A was adjusted to 0.3:0.7. It was confirmed by ICP measurement of the oxygen carrier (metal oxide) that the molar ratio of Cu to Mn was 0.3:0.7.

(Example 4)

A granular oxygen carrier (average particle size: 0.5 μm) was manufactured in the same manner as in Example 1, except that niobium chloride (manufactured by FUJIFILM Wako Pure Chemical Corporation, purity: 99.0%) was used instead of magnesium nitrate hexahydrate, and the molar ratio of Cu to Nb in the liquid A was adjusted to 0.3:0.7. It was confirmed by ICP measurement of the oxygen carrier (metal oxide) that the molar ratio of Cu to Nb was 0.3:0.7.

(Example 5)

A granular oxygen carrier (average particle size: 0.5 μm) was manufactured in the same manner as in Example 1, except that aluminum nitrate nonahydrate (manufactured by FUJIFILM Wako Pure Chemical Corporation, purity: 99.0%) was used instead of magnesium nitrate hexahydrate, and the molar ratio of Cu to Al in the liquid A was adjusted to 0.3:0.7. It was confirmed by ICP measurement of the oxygen carrier (metal oxide) that the molar ratio of Cu to Al was 0.3:0.7.

(Example 6)

A granular oxygen carrier (average particle size: 0.5 μm) was manufactured in the same manner as in Example 5, except that the molar ratio of Cu to Al in the liquid A was adjusted to 0.5:0.5. It was confirmed by ICP measurement of the oxygen carrier (metal oxide) that the molar ratio of Cu to Al was 0.5:0.5.

(Example 7)

A granular oxygen carrier (average particle size: 0.5 $\mu$m) was manufactured in the same manner as in Example 1, except that iron nitrate nonahydrate (manufactured by FUJIFILM Wako Pure Chemical Corporation, purity: 99.0%) was used instead of magnesium nitrate hexahydrate, and the molar ratio of Cu to Fe in the liquid A was adjusted to 0.3:0.7. It was confirmed by ICP measurement of the oxygen carrier (metal oxide) that the molar ratio of Cu to Fe was 0.3:0.7.

(Example 8)

A granular oxygen carrier (average particle size: 0.5 $\mu$m) was manufactured in the same manner as in Example 5, except that the molar ratio of Cu to Fe in the liquid A was adjusted to 0.7:0.3. It was confirmed by ICP measurement of the oxygen carrier (metal oxide) that the molar ratio of Cu to Fe was 0.7:0.3.

(Example 9)

A granular oxygen carrier (average particle size: 0.5 $\mu$m) was manufactured in the same manner as in Example 1, except that cobalt nitrate hexahydrate (manufactured by FUJIFILM Wako Pure Chemical Corporation, purity: 99.0%) was used instead of magnesium nitrate hexahydrate, and the molar ratio of Cu to Co in the liquid A was adjusted to 0.3:0.7. It was confirmed by ICP measurement of the oxygen carrier (metal oxide) that the molar ratio of Cu to Co was 0.3:0.7.

(Example 10)

A granular oxygen carrier (average particle size: 0.5 $\mu$m) was manufactured in the same manner as in Example 5, except that the molar ratio of Cu to Co in the liquid A was adjusted to 0.7:0.3. It was confirmed by ICP measurement of the oxygen carrier (metal oxide) that the molar ratio of Cu to Co was 0.7:0.3.

(Example 11)

A granular oxygen carrier (average particle size: 0.5 $\mu$m) was manufactured in the same manner as in Example 1, except that nickel nitrate hexahydrate (manufactured by FUJIFILM Wako Pure Chemical Corporation, purity: 99.0%) was used instead of magnesium nitrate hexahydrate, and the molar ratio of Cu to Ni in the liquid A was adjusted to 0.3:0.7. It was confirmed by ICP measurement of the oxygen carrier (metal oxide) that the molar ratio of Cu to Ni was 0.3:0.7.

(Example 12)

A granular oxygen carrier (average particle size: 0.5 $\mu$m) was manufactured in the same manner as in Example 1, except that zinc nitrate hexahydrate (manufactured by FUJIFILM Wako Pure Chemical Corporation, purity: 99.0%) was used instead of magnesium nitrate hexahydrate, and the molar ratio of Cu to Zn in the liquid A was adjusted to 0.3:0.7. It was confirmed by ICP measurement of the oxygen carrier (metal oxide) that the molar ratio of Cu to Zn was 0.3:0.7.

(Example 13)

First, as raw materials, copper (II) nitrate trihydrate (manufactured by FUJIFILM Wako Pure Chemical Corporation, purity: 99.9%) and zinc nitrate hexahydrate (manufactured by FUJIFILM Wako Pure Chemical Corporation, purity: 99.0%) were prepared.

Next, this raw material was dissolved in ethanol to prepare a 1 mol/L raw material aqueous solution (liquid A). The molar ratio of Cu to Zn in the liquid A was adjusted to 0.5:0.5.

Next, zeolite particles (manufactured by TOSOH CORPORATION, "330HUA") were added to this liquid A. The amount of zeolite particles added was adjusted to 50 parts by mass with respect to 100 parts by mass of the total (oxygen carrier) of the metal oxide and zeolite particles to be produced.

Then, the ethanol was distilled off from the liquid A containing the zeolite particles using an evaporator, and the residue was recovered.

Next, the recovered residue was dried at 120°C for 12 hours in a dryer and then fired at 700°C for 3 hours to obtain a granular oxygen carrier (average particle size: 0.5 $\mu$m) composed of zeolite particles carrying (binding to) the metal oxide. It was confirmed by ICP measurement of the oxygen carrier (metal oxide) that the molar ratio of Cu to Zn was 0.5:0.5.

(Example 14)

A granular oxygen carrier (average particle size: 0.5 $\mu$m) was manufactured in the same manner as in Example 1, except that indium nitrate trihydrate (manufactured by FUJIFILM Wako Pure Chemical Corporation, purity: 97.0%) was used instead of magnesium nitrate hexahydrate, and the molar ratio of Cu to In in the liquid A was adjusted to 0.1:0.9. It was confirmed by ICP measurement of the oxygen carrier (metal oxide) that the molar ratio of Cu to In was 0.1:0.9.

(Example 15)

A granular oxygen carrier (average particle size: 0.5 $\mu$m) was manufactured in the same manner as in Example 1, except that indium nitrate trihydrate (manufactured by FUJIFILM Wako Pure Chemical Corporation, purity: 97.0%) was used instead of magnesium nitrate hexahydrate, and the molar ratio of Cu to In in the liquid A was adjusted to 0.3:0.7. It was confirmed by ICP measurement of the oxygen carrier (metal oxide) that the molar ratio of Cu to In was 0.3:0.7.

(Example 16)

A granular oxygen carrier (average particle size: 0.5 $\mu$m) was manufactured in the same manner as in Example 1, except that indium nitrate trihydrate (manufactured by FUJIFILM Wako Pure

Chemical Corporation, purity: 97.0%) was used instead of magnesium nitrate hexahydrate, and the molar ratio of Cu to In in the liquid A was adjusted to 0.7:0.3. It was confirmed by ICP measurement of the oxygen carrier (metal oxide) that the molar ratio of Cu to In was 0.7:0.3.

(Comparative Example 1)

First, copper (II) oxide (manufactured by FUJIFILM Wako Pure Chemical Corporation, purity: 99.9%) and calcium oxide (manufactured by FUJIFILM Wako Pure Chemical Corporation, purity: 99.0%) were mixed to obtain a mixture. Copper (II) oxide and calcium oxide were mixed such that the molar ratio of Cu to Ca was 0.5:0.5.

Next, this mixture was pulverized and mixed by a ball mill for 1 hour, and then dried.

Then, the pulverized mixture was ground in an agate mortar for 30 minutes and then fired at 700°C for 3 hours to obtain a metal oxide.

Next, the metal oxide was pulverized by a ball mill to obtain a granular oxygen carrier (average particle size: 0.5 $\mu$m) consisting of the metal oxide alone. It was confirmed by ICP measurement of the oxygen carrier (metal oxide) that the molar ratio of Cu to Ca was 0.5:0.5.

(Comparative Example 2)

First, 2.7 g of copper (II) nitrate trihydrate (manufactured by FUJIFILM Wako Pure Chemical Corporation, purity: 99.9%) was weighed and dissolved in 22 mL of distilled water to obtain copper (II) nitrate aqueous solution.

Then, a 25% aqueous ammonia solution was added dropwise to the copper (II) nitrate aqueous solution to adjust the pH to 13. At this time, while stirring the copper (II) nitrate aqueous solution, the ammonium aqueous solution was dropped at a dropping rate of 15 mL/min at room temperature.

On the other hand, 1.41 g of sodium tungstate dihydrate (manufactured by FUJIFILM Wako Pure Chemical Corporation, purity: 99.9%) was weighed and dissolved in 10 mL of distilled water to obtain a sodium tungstate aqueous solution.

Next, the sodium tungstate aqueous solution was added dropwise to the copper (II) nitrate aqueous solution. At this time, while stirring the copper (II) nitrate aqueous solution, the sodium tungstate aqueous solution was dropped at a dropping rate of 15 ml/min at room temperature to obtain a mixed solution.

After completion of dropping, the mixed solution was heated to 90°C and stirred at that temperature for 4 hours. After standing to cool, the mixed solution was suction-filtered using filter paper (manufactured by Kiriyama Glass Works Co., "No. 4, 95 $\varphi$m/m"), and the precipitate was recovered and then washed with pure water.

Next, the recovered precipitate was dried at 120°C for 12 hours in a dryer and then fired at 600°C for 4 hours to obtain a metal oxide.

Next, the metal oxide was pulverized by a ball mill to obtain a granular oxygen carrier (average particle size:

0.5 μm) consisting of the metal oxide alone. It was confirmed by ICP measurement of the oxygen carrier (metal oxide) that the molar ratio of Cu to W was 0.3:0.7.

(Comparative Example 3)

A granular oxygen carrier (average particle size: 0.5 μm) composed of α-alumina particles carrying the metal oxide was manufactured in the same manner as in Example 13, except that α-alumina particles (manufactured by FUJIFILM Wako Pure Chemical Corporation, average particle size: 0.5 μm) are used instead of zeolite particles, and the amount of α-alumina particles added was adjusted to 90 parts by mass with respect to 100 parts by mass of the total (oxygen carrier) of the metal oxide and α-alumina particles to be produced. It was confirmed by ICP measurement of the metal oxide that the molar ratio of Cu to Zn was 0.5:0.5.

2. X-ray diffraction measurement

Sample preparation of the oxygen carrier was performed prior to X-ray diffraction measurements.
First, about 100 mg of the oxygen carrier was weighed into a mortar and ground with a pestle. Then, oxygen carriers were uniformly filled into the holes of the sample filling portion of the sample plate, and the surface of the sample plate and the surface of the oxygen carriers were adjusted to be flush with each other.
For the X-ray diffraction measurement, a sample horizontal multi-purpose X-ray diffractometer ("D8 DISCOVER" manufactured by Bruker Corporation) was used.
A copper tube lamp using pure copper was used as an anticathode, and characteristic X-ray of CuKα (wavelength (λ) = 1.5418 Å (0.15418 nm)) was used for diffraction.
The diffractometer is appropriately selected with a divergence slit of 0.5° to 1°, a divergence longitudinal limiting slit of 10 mm, a scattering slit of 1° to 2°, and a receiving slit of 0.15 to 0.3 mm.
Then, the prepared oxygen carrier sample was irradiated with X-rays under the conditions of a tube voltage of 40 kV and a tube current of 20 mA.
The scanning angle of the goniometer was set in the range of 10° to 80°, and the measurement was appropriately performed at a scanning speed in the range of 0.1 to 0.5 °/min. The measurement was performed with an arbitrary number of integration times of 2 or more.
After the measurement was completed, the obtained data were analyzed. The data was displayed as a graph (X-ray diffraction profile) with the angle on the horizontal axis and the intensity (cps) on the vertical axis using Excel (registered trademark) or the like, and the presence or absence of diffraction peaks was confirmed. In the graph, the value with the highest peak intensity was defined as the vertex, and the difference between the angle of the vertex and the angle at the point showing half the intensity value of the vertex was calculated and used as the half-value width. A peak having a half-value width of 1° or less was defined as a diffraction peak.
In a case where the left and right sides of the peak had different half-value widths, the larger half-value width was adopted as the half-value width. In a case where there were multiple peaks, the half-value width of each peak was calculated.
In addition, in a case where the peaks overlapped and the half-value width could not be calculated, the peaks were separated by performing peak fitting using the method of least squares or the like, and the half-value width was calculated.
The X-ray diffraction measurement was performed three times for each sample, and the average value was used as the measured value.
A diffraction peak having a half-value width of 0.7° or less was specified, and the peak position was confirmed.

3. Property evaluation of oxygen carrier (conversion efficiency)

Using a rapid catalyst evaluation system ("Single μ-Reactor Rx-3050SR" manufactured by Frontier Laboratories Ltd.) equipped with a microreactor and a gas chromatograph mass spectrometer (GC/MS) directly connected to the microreactor, the properties of oxygen carriers were evaluated by the following procedure.
First, the following process was performed to activate the oxygen carrier in evaluating the properties of the oxygen carrier in the microreactor. A quartz reaction tube having an inner diameter of 3 mm and a length of 78 mm was filled with 0.2 g of oxygen carrier. After that, while flowing helium gas at a flow rate of 20 mL/min, the temperature was raised at a temperature rising rate of 40 °C/min and heated for 20 minutes.
Next, hydrogen gas (reducing gas) was passed through the reaction tube of the microreactor at a flow rate of 20 mL/min for 5 minutes to perform a reduction reaction of the oxygen carrier (first process), and the oxygen carrier was reduced. At this time, water vapor was contained in the gas discharged from the exhaust port of the microreactor.
Then, for gas exchange, helium gas was flowed at a flow rate of 20 mL/min for 5 minutes, and then carbon dioxide gas was flowed at a flow rate of 20 mL/min for 5 minutes to perform a reduction reaction of carbon dioxide (second process), and thus the carbon dioxide gas (raw material gas) was reduced. At this time, carbon monoxide was contained in the produced gas discharged from the exhaust port of the microreactor.

Then, for gas exchange, helium gas was flowed at a flow rate of 20 mL/min for 5 minutes.

Next, the following process was performed for this test. Hydrogen gas (reducing gas) was passed through the reaction tube of the microreactor at a flow rate of 5 mL/min for 5 minutes to perform a reduction reaction of the oxygen carrier (first process), and the oxygen carrier was reduced. At this time, water vapor was contained in the gas discharged from the exhaust port of the microreactor.

Then, for gas exchange, helium gas was flowed at a flow rate of 20 mL/min for 5 minutes, and then carbon dioxide gas was flowed at a flow rate of 5 mL/min for 5 minutes to perform a reduction reaction of carbon dioxide (second process), and thus the carbon dioxide gas (raw material gas) was reduced. At this time, carbon monoxide was contained in the produced gas discharged from the exhaust port of the microreactor.

In the above process, when any gas was flowed, the temperature of the oxygen carrier was maintained at 650°C and atmospheric pressure conditions were maintained.

The conversion efficiency of carbon dioxide to carbon monoxide by the oxygen carrier was calculated by the following expression.

The conversion efficiency is the average conversion efficiency for one minute after starting the carbon dioxide gas to flow into the reaction tube.

$$X_{CO} (\%) = n_{CO, out} / (n_{CO2, in}) \times 100$$

In the above expression, n is the mol fraction of carbon dioxide or carbon monoxide in the raw material gas or produced gas.

In addition, since the selectivity of the reaction is 100%, total $n_{CO2}$ = $n_{CO2, in}$ + $n_{CO, out}$.

The measurement conditions in the gas chromatograph mass spectrometer are as follows.

Column temperature: 200°C
Injection temperature: 200°C
Detector temperature: 250°C
Column: EGA tube (L: 2.5 m, $\varphi$ (inner diameter): 0.15 mm, t: 0 mm)
Column flow rate: 1.00 mL/min
Split ratio: 250
Purge flow rate: 3.0 mL/min

These results are shown in Table 1 below.

[Table 1]

| | Oxygen carrier | | | | | Diffraction peak | | Conversion efficiency (Xco) 650°C [%] |
| | Metal oxide | | | Binder (carrier) | | Peak position 2θ [°] | Half width [°] | |
| | M | | Cu/M molar ratio | | | | | |
| | Type | Electronegativity | | Type | Content [mass%] | | | |
|---|---|---|---|---|---|---|---|---|
| Example 1 | Mg | 1.31 | 0.3/0.7 | - | 0 | 61.6 | 0.3700 | 17.64 |
| Example 2 | Mg | 1.31 | 0.7/0.3 | - | 0 | 61.6 | 0.3870 | 21.93 |
| Example 3 | Mn | 1.55 | 0.3/0.7 | - | 0 | 60.9 | 0.2950 | 31.88 |
| Example 4 | Nb | 1.60 | 0.3/0.7 | - | 0 | 61.6 | 0.3580 | 32.34 |
| Example 5 | Al | 1.61 | 0.5/0.5 | - | 0 | 61.6 | 0.6570 | 47.00 |
| Example 6 | Al | 1.61 | 0.3/0.7 | - | 0 | 61.7 | ' 0.2650 | 49.52 |
| Example 7 | Fe | 1.83 | 0.3/0.7 | - | 0 | 62.4 | 0.5480 | 63.15 |
| Example 8 | Fe | 1.83 | 0.7/0.3 | - | 0 | 61.6 | 0.4670 | 68.36 |
| Example 9 | Co | 1.88 | 0.3/0.7 | - | 0 | 61.7 | 0.4670 | 19.87 |
| Example 10 | Co | 1.88 | 0.7/0.3 | - | 0 | 61.6 | 0.3200 | 20.28 |
| Example 11 | Ni | 1.91 | 0.3/0.7 | - | 0 | 61.6 | 0.4010 | 18.56 |
| Example 12 | Zn | 1.65 | 0.3/0.7 | - | 0 | 61.6 | 0.2620 | 77.00 |
| Example 13 | Zn | 1.65 | 0.5/0.5 | zeolite | 50 | 61.5 | 0.4173 | 67.57 |
| Example 14 | In | 1.78 | 0.1/0.9 | - | 0 | | | 70.66 |
| Example 15 | In | 1.78 | 0.3/0.7 | - | 0 | 60.5 | 0.5200 | 68.99 |
| Example 16 | In | 1.78 | 0.7/0.3 | - | 0 | 60.7 | 0.4770 | 42.26 |
| Comparative Example 1 | Ca | 1.00 | 0.5/0.5 | - | 0 | | | 10.86 |
| Comparative Example 2 | W | 2.36 | 0.3/0.7 | - | 0 | | | 16.77 |
| Comparative Example 3 | Zn | 1.65 | 0.5/0.5 | α-alumina | 90 | | | 23.09 |

EP 4 219 403 A1

The oxygen carrier of each example has a high conversion efficiency of carbon dioxide to carbon monoxide. Also, the conversion efficiency of carbon dioxide to carbon monoxide could be adjusted by changing the type and amount of the element M (doping metal element) and the amount of the binder, which constitute the oxygen carrier.

In contrast, the oxygen carrier of each Comparative Example had a low conversion efficiency of carbon dioxide to carbon monoxide.

4. Manufacture of oxygen carriers

(Example 17)

First, as raw materials, copper (II) nitrate trihydrate (manufactured by FUJIFILM Wako Pure Chemical Corporation, purity: 99.9%) and zinc nitrate hexahydrate (manufactured by FUJIFILM Wako Pure Chemical Corporation, purity: 99.0%) were prepared.

Next, this raw material was dissolved in distilled water to prepare a 1 mol/L raw material aqueous solution (liquid A). The molar ratio of Cu to Zn in the liquid A was adjusted to 0.7:0.3.

In addition, sodium carbonate was dissolved in distilled water to prepare a 1 mol/L sodium carbonate aqueous solution (liquid B).

Next, liquid A and liquid B were simultaneously dropped into a container containing 20 mL of distilled water at 70°C to obtain a mixed solution. The dropping rate of liquid A was set to 10 mL/min, and the mixed solution was stirred such that the generated precipitate was not agglomerated.

In addition, the temperature of the mixed solution was maintained at 70°C, and the dropping rate of the liquid B was also adjusted such that the pH was 7.0.

Then, the mixed solution was maintained at 70°C and continuously stirred at a speed of 50 rpm or more, and matured for 3 hours. After completion of maturation, the precipitate was recovered by filtration and sufficiently washed with water.

Next, the recovered precipitate was dried at 120°C for 12 hours in a dryer, and then fired at 700°C for 3 hours to obtain a metal oxide.

Next, the metal oxide was pulverized by a ball mill to obtain a granular oxygen carrier (average particle size: 0.5 $\mu$m) consisting of the metal oxide alone. It was confirmed by ICP measurement of the oxygen carrier (metal oxide) that the molar ratio of Cu to Zn was 0.7:0.3.

(Example 18)

A granular oxygen carrier (average particle size: 0.5 $\mu$m) was manufactured in the same manner as in Example 17, except that the molar ratio of Cu to Zn in the liquid A was adjusted to 0.5:0.5. It was confirmed by ICP measurement of the oxygen carrier (metal oxide) that the molar ratio of Cu to Zn was 0.5:0.5.

(Example 19)

A granular oxygen carrier (average particle size: 0.5 $\mu$m) was manufactured in the same manner as in Example 17, except that the molar ratio of Cu to Zn in the liquid A was adjusted to 0.3:0.7. It was confirmed by ICP measurement of the oxygen carrier (metal oxide) that the molar ratio of Cu to Zn was 0.3:0.7.

(Example 20)

A granular oxygen carrier (average particle size: 0.5 $\mu$m) was manufactured in the same manner as in Example 17, except that part of the zinc nitrate hexahydrate was changed to aluminum nitrate nonahydrate (manufactured by FUJIFILM Wako Pure Chemical Corporation, purity: 98.0%), and the molar ratio of Cu, Zn, and Al in the liquid A was adjusted to 0.5:0.17:0.33. It was confirmed by ICP measurement of the oxygen carrier (metal oxide) that the molar ratio of Cu, Zn, and Al was 0.5:0.17:0.33.

(Example 21)

A granular oxygen carrier (average particle size: 0.5 $\mu$m) was manufactured in the same manner as in Example 17, except that part of the zinc nitrate hexahydrate was changed to gadolinium nitrate hexahydrate (manufactured by FUJIFILM Wako Pure Chemical Corporation, purity: 99.5%), and the molar ratio of Cu, Zn, and Gd in the liquid A was adjusted to 0.5:0.17:0.33. It was confirmed by ICP measurement of the oxygen carrier (metal oxide) that the molar ratio of Cu, Zn, and Gd was 0.5:0.17:0.33.

(Example 22)

First, as raw materials, copper (II) nitrate trihydrate (manufactured by FUJIFILM Wako Pure Chemical Corporation, purity: 99.9%) and zinc nitrate hexahydrate (manufactured by FUJIFILM Wako Pure Chemical Corporation, purity: 99.0%) were prepared.

Next, this raw material was dissolved in ethanol to prepare a 1 mol/L raw material aqueous solution (liquid A). The molar ratio of Cu to Zn in the liquid A was adjusted to 0.5:0.5.

Next, zeolite particles (manufactured by TOSOH CORPORATION, "330HUA") were added to this liquid A. The amount of zeolite particles added was adjusted to 50 parts by mass with respect to 100 parts by mass of the total (oxygen carrier) of the metal oxide and zeolite particles to be produced.

Then, the ethanol was distilled off from the liquid A containing the zeolite particles using an evaporator, and the residue was recovered.

Next, the recovered residue was dried at 120°C for 12 hours in a dryer and then fired at 700°C for 3 hours to obtain a granular oxygen carrier (average particle size: 0.5 $\mu$m) composed of zeolite particles carrying (binding to) the metal oxide. It was confirmed by ICP measurement of the oxygen carrier (metal oxide) that the molar ratio of Cu to Zn was 0.5:0.5.

(Example 23)

A granular oxygen carrier (average particle size: 0.5 $\mu$m) was manufactured in the same manner as in Example 17, except that the firing temperature was 900°C. It was confirmed by ICP measurement of the oxygen carrier (metal oxide) that the molar ratio of Cu to Zn was 0.7:0.3.

(Comparative Example 4)

A granular oxygen carrier (average particle size: 0.5 $\mu$m) was manufactured in the same manner as in Example 17, except that the firing temperature was 400°C. It was confirmed by ICP measurement of the oxygen carrier (metal oxide) that the molar ratio of Cu to Zn was 0.7:0.3.

(Comparative Example 5)

A granular oxygen carrier (average particle size: 0.5 $\mu$m) was manufactured in the same manner as in Example 20, except that the firing temperature was 400°C. It was confirmed by ICP measurement of the oxygen carrier (metal oxide) that the molar ratio of Cu, Zn, and Al was 0.5:0.17:0.33.

5. X-ray diffraction measurement

Regarding the oxygen carriers obtained in Examples 17 to 22 and Comparative Examples 4 to 5, X-ray diffraction measurement was performed in the same manner as in the above "2. X-ray diffraction measurement", and the diffraction peak and half-value width were calculated from the X-ray diffraction profile.

6. Property evaluation of oxygen carrier (conversion efficiency)

Regarding the oxygen carriers obtained in Examples 17 to 22 and Comparative Examples 4 to 5, the properties of the oxygen carrier were evaluated by the following procedure using the same rapid catalyst evaluation system as in the above "3. Property evaluation of oxygen carrier (conversion efficiency)" under conditions different from those described above "3. Property evaluation of oxygen carrier (conversion efficiency)".

First, the following process was performed to activate the oxygen carrier in evaluating the properties of the oxygen carrier in the microreactor. A quartz reaction tube having an inner diameter of 3 mm and a length of 78 mm was filled with 0.2 g of oxygen carrier. After that, while flowing helium gas at a flow rate of 20 mL/min, the temperature was raised at a temperature rising rate of 40 °C/min and heated for 20 minutes.

Next, hydrogen gas (reducing gas) was passed through the reaction tube of the microreactor at a flow rate of 20 mL/min for 5 minutes to perform a reduction reaction of the oxygen carrier (first process), and the oxygen carrier was reduced. At this time, water vapor was contained in the gas discharged from the exhaust port of the microreactor.

Then, for gas exchange, helium gas was flowed at a flow rate of 20 mL/min for 5 minutes, and then carbon dioxide gas was flowed at a flow rate of 20 mL/min for 5 minutes to perform a reduction reaction of carbon dioxide (second process), and thus the carbon dioxide gas (raw material gas) was reduced. At this time, carbon monoxide was contained in the produced gas discharged from the exhaust port of the microreactor.

Then, for gas exchange, helium gas was flowed at a flow rate of 20 mL/min for 5 minutes.

Next, the following process was performed for this test. Hydrogen gas (reducing gas) was passed through the reaction tube of the microreactor at a flow rate of 30 mL/min for 20 minutes to perform a reduction reaction of the oxygen carrier (first process), and the oxygen carrier was reduced. At this time, water vapor was contained in the gas discharged from the exhaust port of the microreactor.

Then, for gas exchange, helium gas was flowed at a flow rate of 20 mL/min for 5 minutes, and then carbon dioxide gas was flowed at a flow rate of 3 mL/min for 20 minutes to perform a reduction reaction of carbon dioxide (second process), and thus the carbon dioxide gas (raw material gas) was reduced. At this time, carbon monoxide was contained in the produced gas discharged from the exhaust port of the microreactor.

In the above process, when any gas was flowed, the temperature of the oxygen carrier was maintained at 550°C and atmospheric pressure conditions were maintained.

The conversion efficiency of carbon dioxide to carbon monoxide by the oxygen carrier was calculated in the same manner as in the above "3. Property evaluation of oxygen carrier (conversion efficiency)". The measurement conditions for the gas chromatograph mass spectrometer are the same as in the above "3. Property evaluation of oxygen carrier (conversion efficiency)".

These results are shown in Table 2 below.

[Table 2]

| | Oxygen carrier | | | | | Firing temperature [°C] | Diffraction peak | | Conversion efficiency ($X_{CO}$) 550°C [%] |
|---|---|---|---|---|---|---|---|---|---|
| | Metal oxide | | | Binder (carrier) | | | Peak position $2\theta$ [°] | Half width [°] | |
| | Type of M | | Cu/M1/M2 molar ratio | Type | Content [mass%] | | | | |
| | M1 | M2 | | | | | | | |
| Example 17 | Zn | - | 0.7/0.3/- | - | 0 | 700 | 61.5 | 0.3009 | 53.44 |
| Example 18 | Zn | - | 0.5/0.5/- | - | 0 | 700 | 61.5 | 0.3060 | 99.14 |
| Example 19 | Zn | - | 0.3/0.7/- | - | 0 | 700 | 61.6 | 0.2620 | 99.57 |
| Example 20 | Zn | Al | 0.5/0.17/0.33 | - | 0 | 700 | 61.5 | 0.4177 | 78.39 |
| Example 21 | Zn | Gd | 0.5/0.17/0.33 | - | 0 | 700 | 61.5 | 0.4273 | 70.28 |
| Example 22 | Zn | - | 0.5/0.5/- | zeolite | 50 | 700 | 61.5 | 0.4173 | 45.23 |
| Example 23 | Zn | - | 0.7/0.3/- | - | 0 | 900 | 61.6 | 0.2886 | 46.86 |
| Comparative Example 4 | Zn | - | 0.7/0.3/- | - | 0 | 400 | 61.6 | 0.7143 | 27.25 |
| Comparative Example 5 | Zn | Al | 0.5/0.17/0.33 | - | 0 | 400 | 61.5 | 0.7890 | 64.59 |

7. Confirmation of distribution state of elements in oxygen carrier

The oxygen carriers obtained in Examples 17, 23 and Comparative Example 4 were subjected to mapping measurement by STEM-EDS analysis using a transmission electron microscope (HD2700).

The results are shown in FIG. 1.

As shown in FIG. 1, in Comparative Example 4 (400°C), the distribution state of each element is sparse, in Example 17 (700°C), the distribution state of each element is moderate, and in Example 23 (900°C), the distribution state of each element was dense. It was confirmed that the conversion efficiency of carbon dioxide to carbon monoxide decreased in the order of Example 17, Example 23, and Comparative Example 4 due to the difference in the distribution state.

**Industrial Applicability**

According to the oxygen carrier of the present invention, for example, a produced gas containing carbon monoxide can be efficiently manufactured from a raw material gas containing carbon dioxide. In addition, since the oxygen carrier according to the present invention is available for, for example, the chemical looping method, it can contribute to the realization of a carbon recycling society by converting carbon dioxide into a valuable substance and reusing it.

**Claims**

1. An oxygen carrier comprising a metal oxide represented by $Cu_{1-x}(M)_xO_y$ (where M denotes an element having Pauling's electronegativity of 1.3 to 2.3, x represents a positive real number, and y represents an integer of 1 to 4).

2. The oxygen carrier according to claim 1,
   wherein M has an electronegativity of 1.3 to 1.9.

3. The oxygen carrier according to claim 1 or 2,
   wherein M is at least one element belonging to Periods 3 to 6.

4. The oxygen carrier according to any one of claims 1 to 3,
   wherein M is at least one element belonging to Groups 2 to 14.

5. The oxygen carrier according to any one of claims 1 to 4,
   wherein M is at least one selected from the group consisting of magnesium (Mg), aluminum (Al), silicon (Si), titanium (Ti), vanadium (V), chromium (Cr), manganese (Mn), iron (Fe), cobalt (Co), nickel (Ni), zinc (Zn), gallium (Ga), zirconium (Zr), niobium (Nb), silver (Ag), indium (In), hafnium (Hf), and tantalum (Ta) .

6. The oxygen carrier according to any one of claims 1 to 5,
   wherein x is between 0.1 and 0.9.

7. The oxygen carrier according to any one of claims 1 to 6,
   wherein when the metal oxide is measured by an X-ray diffraction method, at least one diffraction peak having a half-value width of 0.7° or less is observed in an X-ray diffraction profile.

8. The oxygen carrier according to any one of claims 1 to 7,
   wherein the diffraction peak is observed at $2\theta$ in a range of 60° to 65° in the X-ray diffraction profile.

9. The oxygen carrier according to any one of claims 1 to 8, comprising a metal oxide containing copper (Cu), and zinc (Zn) as M and containing a second element.

10. The oxygen carrier according to any one of claims 1 to 9,
    wherein the second element includes the zinc (Zn) and at least one selected from the group consisting of aluminum (Al), gadolinium (Gd), silicon (Si), manganese (Mn), cobalt (Co), yttrium (Y), cerium (Ce), and magnesium (Mg).

11. The oxygen carrier according to any one of claims 1 to 10,
    wherein a molar ratio of the second element to a total of the copper (Cu) and the second element is 10 to 90 mol% in the metal oxide.

12. The oxygen carrier according to any one of claims 1 to 11, further comprising a binder that binds the metal oxide.

13. The oxygen carrier according to claim 12,
wherein an amount of the binder is 70 parts by mass or less with respect to 100 parts by mass of the oxygen carrier.

14. The oxygen carrier according to claim 12 or 13,
wherein the binder is at least one selected from the group consisting of zeolite, $Al_2O_3$, $TiO_2$, $SiO_2$, $ZrO_2$, and MgO.

15. The oxygen carrier according to any one of claims 1 to 14,
wherein the oxygen carrier is used separately in a reaction step of reducing carbon dioxide to produce a gas containing carbon monoxide and in a reaction step of reducing the oxidized oxygen carrier with a reducing gas containing hydrogen.

16. A method for manufacturing the oxygen carrier according to any one of claims 1 to 15, the method comprising:

a first step of obtaining a mixed solution by adding dropwise a raw material aqueous solution containing a salt of the copper (Cu) and a salt of M and a basic alkaline aqueous solution to water;
a second step of recovering a precipitate generated in the mixed solution; and
a third step of firing the recovered precipitate at a firing temperature of 500°C to 800°C to obtain the metal oxide.

17. The method for manufacturing the oxygen carrier according to claim 16,
wherein a holding time of the firing temperature is 1 to 24 hours.

18. The method for manufacturing the oxygen carrier according to claim 16 or 17,
wherein a temperature rising rate to the firing temperature is 0.5 to 20 °C/min.

19. A method for manufacturing gas, the method comprising bringing the oxygen carrier according to any one of claims 1 to 15 into contact with a raw material gas containing carbon dioxide to reduce the carbon dioxide and manufacturing a produced gas containing carbon monoxide.

Fig. 1

COMPARATIVE
EXAMPLE 1
400°C

EXAMPLE 1
700°C

EXAMPLE 7
900°C

## INTERNATIONAL SEARCH REPORT

| International application No. |
| --- |
| **PCT/JP2021/034706** |

| **A.** | **CLASSIFICATION OF SUBJECT MATTER** |
| --- | --- |

*C01G 3/00*(2006.01)i; *C01B 32/40*(2017.01)i; *C01G 9/00*(2006.01)i; *C01G 15/00*(2006.01)i; *C01G 33/00*(2006.01)i; *C01G 45/00*(2006.01)i; *C01G 49/00*(2006.01)i; *C01G 51/00*(2006.01)i; *C01G 53/00*(2006.01)i; *B01J 23/72*(2006.01)n; *B01J 23/745*(2006.01)n; *B01J 23/75*(2006.01)n; *B01J 23/755*(2006.01)n; *B01J 23/78*(2006.01)n; *B01J 23/80*(2006.01)n; *B01J 23/825*(2006.01)n; *B01J 23/83*(2006.01)n; *B01J 23/847*(2006.01)n; *B01J 23/889*(2006.01)n; *B01J 37/03*(2006.01)n; *B01J 37/08*(2006.01)n

FI: C01G3/00; C01B32/40; C01G9/00 B; C01G15/00 B; C01G33/00 A; C01G45/00; C01G49/00 A; C01G51/00 A; C01G53/00 A; B01J23/745 M; B01J23/75 M; B01J23/755 M; B01J23/78 M; B01J23/80 M; B01J23/825 M; B01J23/83; B01J23/847 M; B01J23/889 M; B01J37/03 B; B01J37/08; B01J23/72 M

According to International Patent Classification (IPC) or to both national classification and IPC

| **B.** | **FIELDS SEARCHED** |
| --- | --- |

Minimum documentation searched (classification system followed by classification symbols)

C01G; C01B32/40; B01D53/62; B01J21/00-38/74

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | KR 10-2020-0055939 A (INDUSTRIAL COOPERATION FOUNDATION CHONBUK NATIONAL UNIVERSITY) 22 May 2020 (2020-05-22) example 2, claims, paragraphs [0001], [0012]-[0027], fig. 1 | 1-8, 12-15, 19 |
| A | | 9-11, 16-18 |
| X | Fast oxygen ion migration in Cu-In-oxide bulk and its utilization for effective CO2 conversion at lower temperature. ChemRxiv. Cambridge: Cambridge Open Engage., 18 September 2020, <DOI: 10.26434/chemrxiv.12973844.v1> fig. 1, page 1, right column, line 17 to page 3, right column, line 15 | 1-8, 12-15, 19 |
| A | | 9-11, 16-18 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 November 2021** | **30 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2021/034706** |

| C. | DOCUMENTS CONSIDERED TO BE RELEVANT | |
| --- | --- | --- |
| Category* | Citation of document, with indication, where appropriate, of the relevant passages | Relevant to claim No. |
| X | KR 10-1889654 B1 (RESEARCH COOPERATION FOUNDATION OF YEUNGNAM UNIVERSITY) 20 August 2018 (2018-08-20)<br>paragraphs [0008]-[0011], [0013]-[0017], examples, fig. 1 | 1-8, 12-14 |
| A | | 9-11, 15-19 |
| X | CN 110553275 A (WUHAN INSTITUTE OF MARINE ELECTRIC PROPULSION (CHINA SHIPBUILDING INDUSTRY CORPORATION NO.712 INSTITUTE)) 10 December 2019 (2019-12-10)<br>claims, paragraphs [0010]-[0012], [0022]-[0023] | 1-14 |
| A | | 15-19 |
| X | WO 2014/155116 A1 (GAS RECOVERY AND RECYCLE LIMITED) 02 October 2014 (2014-10-02)<br>example 2, claims, page 2, line 30 to page 3, line 15 | 1-8, 11-14, 16-18 |
| A | | 9-10, 15, 19 |
| X | US 2011/0207069 A1 (LAMBERT, Arnold) 25 August 2011 (2011-08-25)<br>claims, paragraphs [0027]-[0051], [0069], examples 1, 5-6, 8-9 | 1-14 |
| A | | 15-19 |
| A | 日本化学会編, 化学便覧　基礎編, 改訂 3 版, 1984, p. II-589<br>table 14.40, non-official translation (Edited by the Chemical Society of Japan. Kagaku Binran Basic edition, Revised 3rd edition.) | 1-19 |
| A | 井本英二, 電気陰性度の考え方の変遷, 有機合成化学, 1990, vol. 48, no. 1, pp. 2-15, <DOI: 10.5059/yukigoseikyokaishi.48.2><br>appendix 1, (IMOTO, Eiji. Development of the Concepts of Electronegativity. Journal of Synthetic Organic Chemistry, Japan.) | 1-19 |

Form PCT/ISA/210 (second sheet) (January 2015)

**INTERNATIONAL SEARCH REPORT**
Information on patent family members

International application No.

**PCT/JP2021/034706**

| Patent document cited in search report | | | Publication date (day/month/year) | Patent family member(s) | | | Publication date (day/month/year) |
|---|---|---|---|---|---|---|---|
| KR | 10-2020-0055939 | A | 22 May 2020 | (Family: none) | | | |
| KR | 10-1889654 | B1 | 20 August 2018 | (Family: none) | | | |
| CN | 110553275 | A | 10 December 2019 | (Family: none) | | | |
| WO | 2014/155116 | A1 | 02 October 2014 | GB | 2512334 | A | |
| US | 2011/0207069 | A1 | 25 August 2011 | WO | 2010/040916 | A1 | |
| | | | | EP | 2331248 | A1 | |
| | | | | FR | 2937030 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013072197 A
- US 9492809 B
- US 9540236 B

**Non-patent literature cited in the description**

- *Journal of CO2 Utilization,* 2017, vol. 17, 60-68